# EUROPÄISCHE PATENTSCHRIFT

(11) **EP 1 220 406 B1**
(45) Veröffentlichungstag und Bekanntmachung des Hinweises auf die Patenterteilung: **21.12.2005**
(21) Anmeldenummer: 01124200.5
(22) Anmeldetag: 11.10.2001
(51) Int. Cl.: H02G 5/08, H02B 1/48

(54) **Abgangs- oder Anschlusskasten**
Outlet or junction box
Boîtier de sortie ou d'interconnection

(30) Priorität: 23.12.2000 DE 10065088
(43) Veröffentlichungstag der Anmeldung: 03.07.2002
(73) Patentinhaber: SIEMENS AKTIENGESELLSCHAFT, 91052 Erlangen (DE)
(72) Erfinder: Haar, Rainer, 53121 Bonn (DE); Kilic, Kemal m., 50735 Köln (DE)

(56) Entgegenhaltungen:
- EP-A- 0 555 665
- US-A- 3 335 329

## Beschreibung

Die Erfindung betrifft einen Abgangs- oder Anschlusskasten

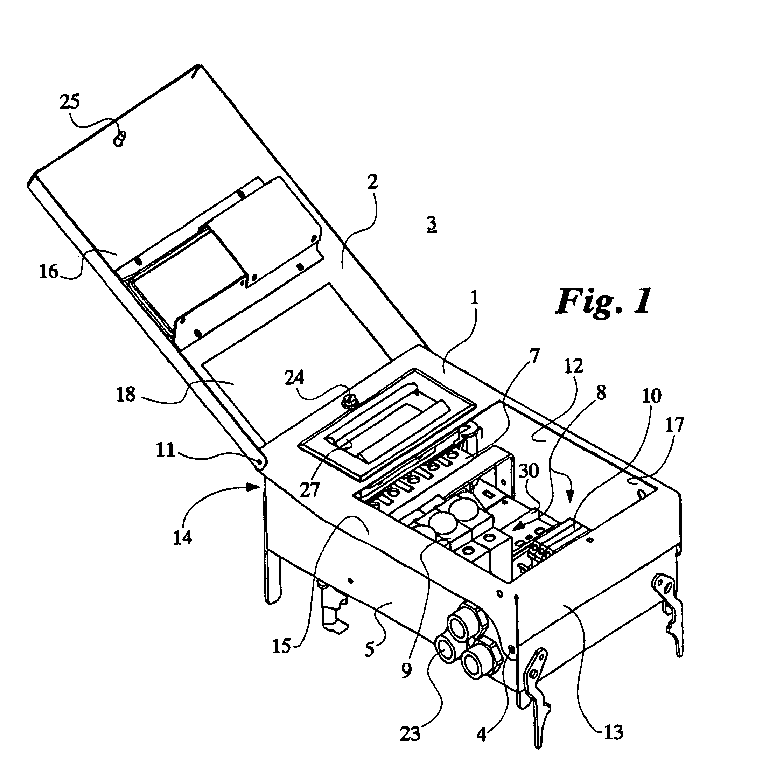

In der Druckschrift EP 0 555 665 B1 ist ein Abgangskasten gezeigt und beschrieben, der, wie dort in den Figuren 11 bis 15 gezeigt ist, zwei Deckelabschnitte aufweist, die abhängig voneinander geöffnet werden können. Der erste Deckelabschnitt steht mit einer Verriegelungsvorrichtung in Wirkverbindung. Der erste Deckelabschnitt kann nur geöffnet werden, wenn der zweite bereits offen ist. Der erste Deckelabschnitt trennt beim Öffnen automatisch die Stromzufuhr. Unterhalb des zweiten Deckelabschnitts ist eine NH-Sicherung angeordnet, die beim Öffnen des zweiten Deckels aus dem Sicherungssockel herausgezogen wird. Die genannte Schrift zeigt in der Figur 1 einen Abgangskasten mit einem einzigen Deckel, eine Trennkontaktvorrichtung mit Trennkontaktstellen und einen Trennkontaktraum. Die Trennkontaktvorrichtung wirkt als Sicherheitsvorrichtung, die beim Arbeiten mit offenem Deckel für Spannungsfreiheit sorgt.

Beim Öffnen des Gehäusedeckels werden bei bekannten und mit Sicherheitsvorrichtungen versehenen Abgangskästen alle abgeschlossenen Verbraucher zwangsläufig vom Netz getrennt. Dies führt dazu, dass Verbraucher, die unabhängig voneinander betrieben werden müssen, wie z. B. Computer in Rechenzentren jeweils über eigene Abgangskästen angeschlossen werden müssen.

Aus der Druckschrift US 3,335,329 ist ein Abgangskasten nach dem Oberbegriff des Anspruches 1 bekannt, wobei der Kasten Zusätzlich zu einem, im Wesentlichen nur den Trennkontaktraum abdeckenden ersten Deckel mit daran angeordneten Kontaktbrücken einen zweiten Deckel umfasst, wobei mindestens der Anschlussraum über den zweiten Deckel verschließbar ist, der unabhängig von dem ersten Deckel zu öffnen ist, und wobei der Anschlussraum nur für fingersichere Schutz- und Anschlusselemente vorgesehen ist.

Aufgabe der Erfindung ist es, einen Kasten nach dem Oberbegriff des Anspruches 1 zu schaffen, der sicher und ungefährlich ist, eine hohe Stromverfügbarkeit aufweist und dabei besonders handhabungsfreundlich ist.

Die Aufgabe der Erfindung wird durch die kennzeichnenden Merkmale des Anspruches 1 gelöst, während in den Unteransprüchen besonders vorteilhafte Weiterbildungen der Erfindung gekennzeichnet sind.

Bei der erfindungsgemäßen Ausgestaltung kann der erste Deckel in einem einzigen Montageschritt betätigt werden, und zwar entweder ohne den zweiten Deckel öffnen oder schließen zu müssen oder indem der zweite Deckel mit dem ersten Deckel wie ein einziger Deckel geöffnet oder geschlossen wird.

Die Sicherheitsfunktion wird im wesentlichen dadurch erreicht, dass der Abgangs- oder Anschlußkasten einen, nur über dem Trennkontaktraum angeordneten, ersten Deckel mit daran angeordneten Kontaktbrücken aufweist. Durch die Kontaktbrücken, die in jeder Art und Weise ausgeführt werden können, solange sie die Stromzufuhr galvanisch unterbrechen, wobei die geometrische Form nicht entscheidend ist, kann an dem Abgangs- oder Anschlußkasten auch in nicht fingersicheren Bereichen gearbeitet werden. Das ist auch der Fall, wenn Klemmenblöcke oder Sicherungselemente ausgetauscht werden müssen. Vorteilhaft ist insbesondere, wenn die Trennkontaktvorrichtung mit anderen Sicherheitsfunktionen, wie einer mechanischen Verriegelungsfunktion kombinierbar ist.

Dabei ist es von untergeordneter Bedeutung, ob Kontaktbrücken an einem Deckel oder andere die Stromzufuhr trennende Mittel an einem Deckel angeordnet sind.

Durch die Anordnung von zwei Deckeln erfolgt grundsätzlich eine Einteilung in einem Trennkontaktraum und einen Anschlussraum. Wenn der Anschlussraum mit einem zweiten Deckel verschließbar ist, der unabhängig von einem ersten Deckel zu öffnen ist, kann dennoch, ohne zwangsläufige Betätigung der Trennkontaktvorrichtung, in dem Anschlussraum gearbeitet werden.

Besonders sicher wird der Abgangs- oder Anschlußkasten erst dadurch, wenn der Anschlussraum nur für Schutz- und Anschlusselemente nach Schutzart IP20 (fingersicher) vorgesehen ist.

Günstig für die Montage des zweiten Deckels und einfach ausgestaltbar ist er, wenn er klappenförmig angelenkt und zu öffnen ist.

Eine besonders handhabungsfreundliche, sichere und einfach herstellbare Ausführungsform ergibt sich, wenn der zweite Deckel eine erste Lagerstelle umfasst, die mit dem Grundgehäuse verbunden ist, und der zweite Deckel eine zweite Lagerstelle umfasst, die einer zweiten Stirnseite des Abgangs- oder Anschlusskastens zugeordnet ist, wenn die erste Lagerstelle einer ersten - der zweiten Stirnseite gegenüberliegenden - Stirnseite zugeordnet ist, wodurch sich zwei unterschiedliche Öffnungs- bzw. Drehrichtungen ergeben.

Jeder Deckel kann mit zwei Deckflächen zur Auflage auf dem Anschlussraum und auf dem Trennkontaktraum ausgebildet sein.

Die Deckfläche auf dem Anschlussraum des ersten Deckels kann fensterartig aufgebrochen sein. Der zweite Deckel kann mit dem ersten Deckel über eine zweite Lagerstelle derart verbunden sein, dass der zweite Deckel entweder vollständig über dem Trennkontaktraum und dem Anschlussraum oder nur über dem Anschlussraum aufliegt und aufklappbar ist.

Durch diese Kombinationslösung gelingt es, mit wenig Aufwand einerseits eine vormontierbare Deckel-Einheit zu schaffen und andererseits eine störlichtbogengerechte Lösung zu bieten.

Günstig ist eine Konstruktion, wenn die Trennfunktion und mögliche Verriegelungsfunktionen mit dem Öffnen des zweiten Deckels ausgelöst werden, was besonders handhabungsfreundlich ist.

Eine weitere besonders vorteilhafte Ausgestaltung ergibt sich, wenn der zweite Deckel eine Aussparung aufweist, die einen Durchgriff auf den ersten Deckel erlaubt. Damit werden bedarfsweise ein Griff, Arretierungsmittel oder weitere nicht näher beschriebene Teile von außen auch bei geschlossenem zweiten Deckel zugänglich.

Um einen direkten Zugang zu Sicherungselementen, wie Schaltautomaten, Leitungsschutzschaltem, Leistungsschaltern, Motorschutzschaltem, Schmelzsicherungen oder dergleichen zu ermöglichen und ein Wiedereinschalten der Schaltgeräte, bzw. ein Austauschen von Sicherungen ohne den zweiten Deckel öffnen zu müssen, erweist es sich als vorteilhaft, dass oberhalb des Anschlussraumes eine Deckelklappe angeordnet ist.

Der Schaltzustand der Geräte ist von außen sichtbar, wenn die Deckelklappe transparent ist.

Ein unzulässiges Aufsetzen oder Abnehmen des Abgangs- oder Anschlusskastens auf dem Schienenkanal wird verhindert, wenn der erste Deckel mit einer Verriegelungseinrichtung versehen ist, die Befestigungs- und Verriegelungsmittel und mit den Befestigungs- und Verriegelungsmittel wirkverbundenen Sperrmittel umfasst, wobei die Befestigungs- und Verriegelungsmittel an dem Schienenkanal befestigbar sind.

Die Fixierung des Abgangs- oder Anschlusskastens wird verbessert, wenn der Abgangs- oder Anschlußkasten Befestigungselemente umfasst, wobei die Befestigungselemente an dem Schienenkanal befestigbar sind.

Der Abgangs- oder Anschlußkasten hat mindestens eine Kabeldurchführung, vorzugsweise jedoch nur an einer Seite.

Ein sicherer Verschluss des Trennkontaktraums ergibt sich, wenn der erste Deckel erste Arretierungsmittel umfasst und/oder die ersten Arretierungsmittel an dem Grundgehäuse an mindestens einer Gegenarretierung arretierbar sind.

Ein sicherer Verschluss des Anschlussraums ergibt sich, wenn der zweite Deckel zweite Arretierungsmittel aufweist, wobei in günstiger Weise die zweiten Arretierungsmittel am ersten Deckel und/oder am Grundgehäuse arretierbar sein können.

Ebenso ist es für die Handhabung günstig, wenn mindestens einer der Deckel mit einem Griff versehen ist.

Formschön ist es, dass der Griff im Abgangs- oder Anschlusskasten eingesenkt angeordnet ist.

Kosten sparend ist es, wenn der Griff einstückig mit einem Isolierkörper zur Halterung der Kontaktbrücken ausgeführt ist.

Die Deckel haben primär die Funktion der Einzel-Abdeckung der jeweiligen Anschlussräume. Wobei die Deckel jedoch auch mit Deckflächen für beide Anschlussräume ausgebildet sein können, so dass sie über jeweils beiden Räumen aufliegen können. Weiterhin hat mindestens der erste Deckel die Funktion der Spannungstrennung beim Öffnen. Diese Funktionen der Deckel können untereinander sinnvoll kombiniert sein. Eine vorteilhafte Ausgestaltung ergibt sich, wenn der erste Deckel so mit dem zweiten Deckel scharnierartig verbunden ist, dass beide Deckel zwei übereinander angeordnete Lagen bilden.

Anhand der Zeichnung, in der vier Ausführungsbeispiele dargestellt sind, sollen die Erfindung, die Ausgestaltungen und Verbesserungen der Erfindung und weitere Vorteile näher beschrieben und erläutert werden.

Es zeigen:
- Figur 1: eine perspektivische Darstellung des Abgangs- oder Anschlusskasten mit geöffnetem zweiten Deckel,
- Figur 2: eine perspektivische Darstellung des Abgangs- oder Anschlusskastens mit geschlossenem zweiten Deckel,
- Figur 3: eine perspektivische Darstellung des Abgangs- oder Anschlusskastens mit geöffnetem ersten und zweiten Deckel,
- Figur 4: eine perspektivische Darstellung des Abgangs- oder Anschlusskastens mit geöffneter Deckelklappe,
- Figur 5: eine Prinzipdarstellung einer zweiten Ausführungsform des erfindungsgemäßen Abgangs- oder An-schlusskastens,
- Figur 6: eine Prinzipdarstellung einer dritten Ausführungsform des erfindungsgemäßen Abgangs- oder Anschlusskastens und
- Figuren 7und 8: eine Prinzipdarstellung einer vierten Ausführungsform des erfindungsgemäßen Abgangs- oder Anschlusskastens.

Die Figur 1 zeigt einen Abgangs- oder Anschlusskasten 3 für einen Schienenverteiler zur Verteilung elektrischer Energie. Der hier nicht näher dargestellte Schienenverteiler, auf dem der Abgangs- oder Anschlusskasten aufsetzbar ist, ist in der DE 34 37 586 A1 gezeigt und beschrieben. Der Schienenverteiler umfasst einen Schienenkanal mit darin geführten Stromschienen und Abgangsstellen, an denen der in den Figuren 1 bis 4 dargestellte Abgangs- oder Anschlusskasten anschließbar ist.

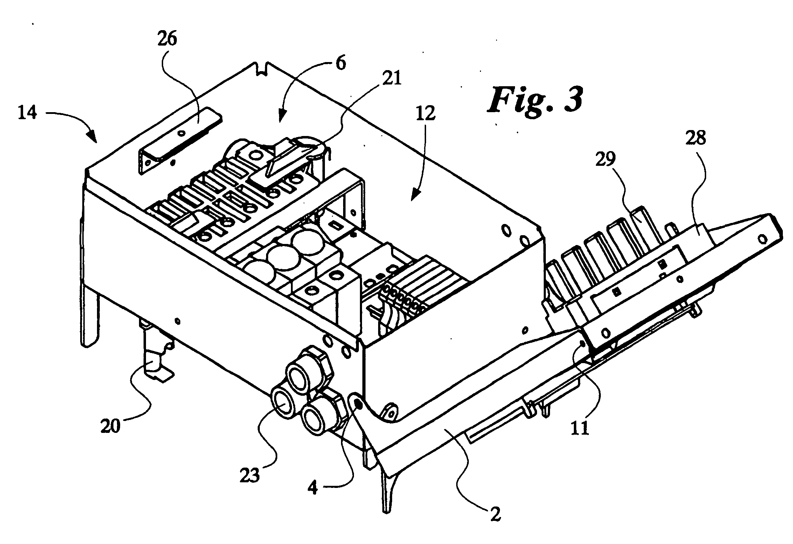

Der Abgangs- oder Anschlusskasten 3 weist Kontaktstecker in bekannter Weise auf, die an den Abgangsstellen an den Stromschienen kontaktierbar sind. Der Kontaktstecker ist, wie auch der Abgangskasten, der in der Druckschrift beschrieben ist, mit einer in einem Trennkontaktraum 6 angeordneten Trennkontaktvorrichtung 7 elektrisch verbunden. Die mit einem ersten Deckel 1 fest verbundenen Kontaktbrücken überbrücken die Trennkontaktvorrichtung 7 elektrisch nur bei geschlossenem Deckel. Dies hat den Sinn, dass beim Öffnen des ersten Deckels 1 die Stromzufuhr zu den an dem Abgangs- oder Anschlusskasten 3 angeschlossenen elektrischen Verbrauchern unterbrochen ist. Der Abgangs- oder Anschlusskasten 3 kann vom Schienenverteiler abmontiert werden, ohne dass zwischen den Kontaktsteckern und den Stromschienen einem zum Teil sehr gefährliche Lichtbogenbildung entsteht. In einem Anschlussraum 12 sind, wie in den Figuren 1 und 3 zu sehen ist, Schutz- und Anschlusselemente 8, wie Sicherungselemente 9 oder Klemmen 10, vorhanden, die verschiedenen Verbrauchern oder Verbrauchergruppen zugeordnet sind. Die Sicherungselemente 9 oder Klemmen 10 werden auf Hutschienen 30 montiert.

Der Abgangs- oder Anschlusskasten 3 weist erfindungsgemäß einen, im Wesentlichen nur den Trennkontaktraum 6 abdeckenden ersten Deckel 1 (Deckfläche 15) mit daran angeordneten Kontaktbrücken auf. Weiterhin ist der erste Deckel 1 so ausgeführt, dass er zwangsläufig nur mit dem zweiten Deckel 2 zu öffnen oder zu schließen ist.

Der Anschlussraum 1 ist durch einen zweiten Deckel 2, der unabhängig von dem ersten Deckel 2 klappenförmig zu öffnen bzw. zu schließen ist, verschließbar. Der zweite Deckel 2 weist eine erste Lagerstelle (Scharnier) 4 auf, die mit dem Grundgehäuse 5 verbunden ist. Zusätzlich sind beide Deckel über eine zweite Lagerstelle 11 miteinander gelenkig verbunden. Die Lagerstelle 11 ist einer zweiten Stirnseite 14 des Kastens zugeordnet, wie die Figur 1 zeigt. Der Kasten 3 umfasst eine erste Stirnseite 13 und eine zweite gegenüberliegende Stirnseite 14. Die erste Lagerstelle 4 ist der ersten Stirnseite 13 zugeordnet. Der zweite Deckel 2 weist zwei Deckflächen für jeden den Räumen auf. Mit der gezeigten Anordnung kommen beide Deckel in ihrer gesamten Länge übereinander zu liegen. Vorzugsweise hat die Deckfläche 15 des ersten Deckels über dem Anschlussraum 12 eine fensterartige Anschlussraumöffnung 17. Der zweite Deckel 2 liegt entweder vollständig über dem Trennkontaktraum 6 und dem Anschlussraum 12, wie Fig. 3 zeigt, oder er ist nur über dem Anschlussraum 12 aufklappbar, wie Fig. 1 zeigt.

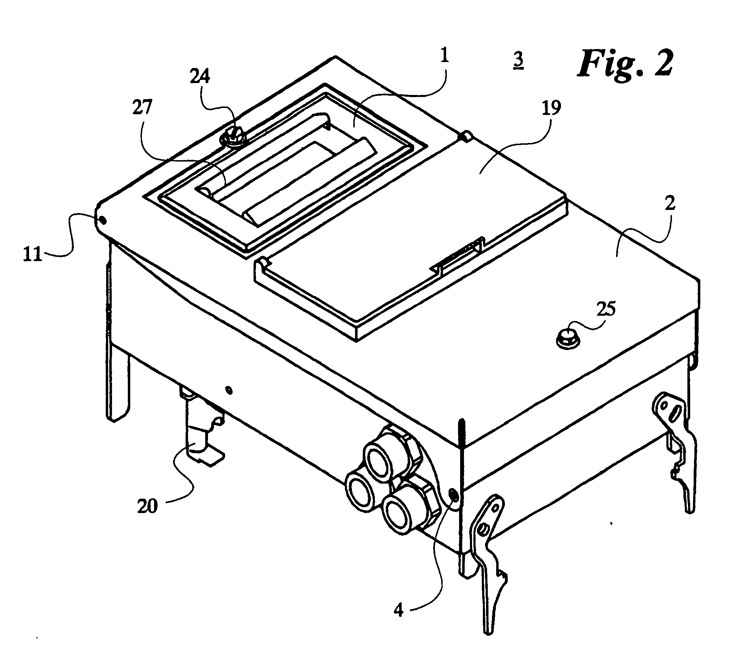

Eine erste Lagerstelle 4 (Scharnier) zum Grundgehäuse ist am ersten Deckel 1 angeordnet. Eine zweite Lagerstelle (Scharnier) 11 verbindet den ersten mit dem zweiten Deckel 2, wie in den Figuren 1 und 3 gezeigt ist. Die Lagerstellen 4 und 11 sind wechselseitig angeordnet. Der zweite Deckel 2 kann mit dem ersten Deckel 1 wie ein einziger Deckel geöffnet und geschlossen werden, wie ein Vergleich der Figuren 2 und 3 zeigt.

Erfindungsgemäß sind in dem Anschlussraum 12 nur fingersichere Schutz- und Anschlusselemente 8 vorhanden. Ein Öffnen des zweiten Deckels 2, beispielsweise zu Kontrollzwecken, ist ohne Unterbrechung der Stromversorgung für z.B. Rechenanlagen möglich. Eine Berührung spannungsführender Teile ist mit geöffnetem zweiten Deckel nicht möglich.

Der zweite Deckel 2 weist, wie in der Fig. 1 zu sehen ist, eine Aussparung 18 auf, die im geschlossenen Zustand direkt über dem ersten Deckel 1 zu liegen kommt.

Die Aussparung 18 bietet sich für die Anordnung eines Griffes 27 an. Der Griff 27 ist an dem zweiten Deckel 2 angeordnet. In dieser Ausführungsform wird der Griff 27 im Kasten eingesenkt montiert, wobei der Griff einstückig mit einem Isolierkörper 28 zur Halterung der Kontaktbrücken 29 verbunden ist.

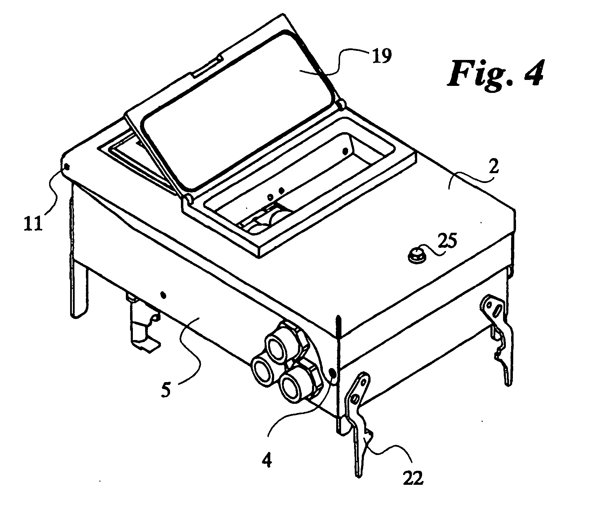

Über dem Anschlussraum 12 ist, wie in den Figuren 2 und 4 dargestellt ist, eine transparente Deckelklappe 19 für den direkten Zugang zu Betätigungshebeln, Schaltknebeln und ähnlichen Teilen angeordnet.

Der erste Deckel 1 ist mit einer in dem Dokument EP 0 555 665 B1 näher gezeigten und erläuterten Verriegelungseinrichtung versehen, wobei die Verriegelungseinrichtung Befestigungs- und Verriegelungsmittel 20 und mit den Befestigungs- und Verriegelungsmittel 20 wirkverbundenen Sperrmittel 21 aufweist. Die Befestigungs- und Verriegelungsmittel 20 sind an dem Schienenkanal befestigbar

Die Befestigungs- und Verriegelungsvorrichtung besteht, wie die Figuren des Dokuments EP 0 555 665 B1 zeigen, aus einer um ihre Längsachse drehbaren Achse, die ein mit dem Schienenkanal korrespondierendes Befestigungs- und Verriegelungselement (Befestigungs- und Verriegelungsmittel 20) und ein mit dem zweiten Kontaktorgan korrespondierendes Sperrteil aufnimmt. Die Befestigungs- und Verriegelungsvorrichtung weist einen Befestigungszapfen zum Halten des Abgangskastens und einen Sperr-Riegel auf, der ein unzulässiges Aufsetzen des Abgangskastens auf einen Schienenkanal verhindert. Die Achse ist bodenseitig angeordnet und steht axial unter Federwirkung. Die Befestigungs- und Verriegelungsvorrichtung ist nur innerhalb des Abgangskastens betätigbar. Der Befestigungszapfen ist mit mindestens einer Steigung versehen. Das Sperrteil blockiert das Schließen des ersten Deckels 1 bei nicht auf dem Schienenkanal befestigtem Abgangskasten. Das Sperrteil besteht aus einem einstückig angeformten Sperrstift und einem ebenfalls einstückig angeformten und im wesentlichen mit dem Sperrstift verbundenen Handhabungsabschnitt, wobei die Drehbewegung des Sperrteiles durch einen Anschlag begrenzt wird.

Das Befestigungs- und Verriegelungselement ist in Fig. 3 mit dem Bezugszeichen 20 gekennzeichnet. Zusätzlich sind weitere Befestigungselemente an dem Kasten 3 angeordnet. Weitere Befestigungselemente zur Schienenkanalbefestigung sind mit 22 gekennzeichnet.

Der Kasten 3 weist an einer Seite eine Kabeldurchführung 23 auf. Sie besteht im wesentlichen aus Metall.

Wie aus den Figuren 1 und 2 zu entnehmen ist, ist der erste Deckel 1 mit ersten Arretierungsmittel 24 versehen. Diese Arretierungsmittel 24 wirken mit einer Gegenarretierung 26 am Grundgehäuse 5 zusammen, die Fig. 3 zeigt.

Der zweite Deckel 2 bzw. hier die Deckfläche 16 für den Anschlussraum weist zweite Arretierungsmittel 25 auf, die in den Figuren 1 und 2 abgebildet sind. Die zweiten Arretierungsmittel 25 sind an der Deckfläche 15 des ersten Deckels arretierbar.

Durch die schamierartige Verbindung der Deckel miteinander wird der erste Deckel 1 mit dem zweiten Deckel 2 derart gekoppelt, dass der erste Deckel 1 zwangsläufig mit der Öffnungsbewegung des zweiten Deckels 2 bewegt wird.

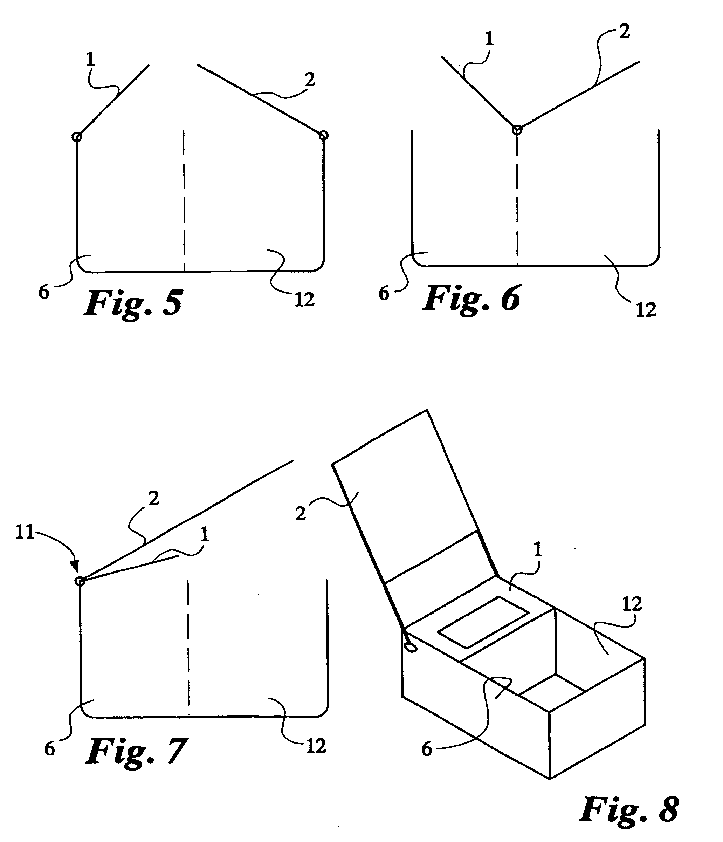

In einer weiteren, in Fig. 5 gezeigten Ausführungsform ist der erste Deckel 1 unabhängig von dem zweiten Deckel 2 entfernbar bzw. zu öffnen.

Die vorliegende Erfindung ist nicht auf die vorstehend beschriebenen Ausführungsformen beschränkt, sondern umfasst auch alle im Schutzbereich der Erfindung gleichwirkenden Ausführungsformen. So lässt sich die Erfindung beispielsweise durch weitere Ausführungsformen, die in den Figuren 5 bis 7 prinzipiell dargestellt sind, realisieren.

Die Lagerung der Deckel 1, 2 kann, wie Figur 5 zeigt, unabhängig voneinander, an den Stirnseiten oder, wie Figur 6 zeigt, in der Mitte angeordnet sein. In beiden Fällen decken die Deckel einzeln nur einen der Räume 6 oder 12 ab.

Die Deckel 1, 2 können auch übereinander, mit einer zusammenfallenden Lagerung (Scharnier) angeordnet sein, wie Figur 7 zeigt. Die Deckel können hierbei unabhängig voneinander geöffnet werden, indem der innere Deckel durch eine größere Öffnung im oberen Deckel hindurchtreten kann, wie in Figur 8 gezeigt. Der zweite Deckel 2 kann auch nur eine Deckfläche für den Anschlussraum umfassen, wie die Figur 8 zeigt.

Ferner gehören auch alle in der Zeichnung gezeigten Merkmale und die hier beschriebenen zur Erfindung.

### Liste der Bezugszeichen

erster Deckel 1 für Kontaktraum
zweiter Deckel 2 für Anschlussraum
Abgangs- oder Anschlußkasten 3
erste Lagerstelle 4
Grundgehäuse 5
Trennkontaktraum 6
Trennkontaktvorrichtung 7
Schutz- und Anschlusselemente 8
Sicherungselemente 9
Klemmen 10
zweite Lagerstelle 11
Anschlussraum 12
erste Stirnseite 13
zweite Stirnseite 14
erste Deckfläche 15
zweite Deckfläche 16 für Anschlussraum
Anschlussraumöffnung 17
Aussparung 18
Deckelklappe 19
Befestigungs- und Verriegelungsmittel 20
Sperrmittel 21
Befestigungselemente 22
Kabeldurchführung 23
erste Arretierungsmittel 24
zweite Arretierungsmittel 25
Gegenarretierung 26
Griff 27
Gegenarretierung 26
Griff 27
Isolierkörper 28
Kontaktbrücken 29
Hutschienen 30

## Patentansprüche

1. Abgangs- oder Anschlusskarten (3) für einen Schienenverteiler zur Verteilung elektrischer Energie, wobei der Schienenverteiler einen Schienenkanal mit darin geführten Stromschienen und Abgangsstellen, an denen das Grundgehäuse (5) des Kastens anschließbar ist, umfasst, wobei es Kontaktstecker umfasst, die an den Kontaktstellen an den Stromschienen kontaktierbar sind, wobei die Kontaktstecker mit einer in einem Trennkontaktraum (6) angeordneten Trennkontaktvorrichtung (7) elektrisch verbunden sind, die mit an einem ersten Deckel (1) befindlichen Kontaktbrücken (29) nur bei geschlossenem ersten Deckel (1) elektrisch überbrückt wird, wobei in einem Anschlussraum (12) Schutz- und Anschlusselemente (8, 9, 10) montiert sind, wobei der Kasten (3) zusätzlich zu dem im Wesentlichen nur den Trennkontaktraum (6) abdeckenden ersten Deckel (1) mit daran angeordneten Kontaktbrücken einen zweiten Deckel (2) umfasst, wobei mindestens der Anschlussraum (12) über den zweiten Deckel (2) verschließbar ist, der unabhängig von dem ersten Deckel (1) zu öffnen ist, und wobei der Anschlussraum (12) nur für fingersichere Schutz- und Anschlusselemente (8) vorgesehen ist,
**dadurch gekennzeichnet, dass**
die Anordnung und Lagerung des ersten Deckels (1) derart ausgeführt ist, dass der erste Deckel (1) entweder unabhängig von dem zweiten Deckel (2) oder zwangsläufig nur mit dem zweiten Deckel (2) zu öffnen ist.

2. Kasten nach Anspruch 1,
**dadurch gekennzeichnet, dass**
der zweite Deckel (2) eine erste Lagerstelle (4) umfasst, die mit dem Grundgehäuse (5) verbunden ist, und dass der zweite Deckel (2) eine zweite Lagerstelle (11) umfasst, die einer zweiten Stirnseite (14) des Kastens (3) zugeordnet ist, dass die erste Lagerstelle (4) einer ersten - der zweiten Stirnseite (14) gegenüberliegenden - Stirnseite (13) zugeordnet ist, dass jeder Deckel (1, 2) mit zwei Deckflächen zur Auflage auf dem Anschlussraum (12) und auf dem Trennkontaktraum (6) ausgebildet ist, wobei die Deckfläche (15) auf dem Anschlussraum (12) des ersten Deckels (1) fensterartig aufgebrochen ist und der zweite Deckel (2) mit dem ersten Deckel (1) über eine zweite Lagerstelle (11) derart verbunden ist, dass der zweite Deckel (2) entweder vollständig über dem Trennkontaktraum (6) und dem Anschlussraum (12) oder nur über dem Anschlussraum (12) aufklappbar ist.

3. Kasten nach einem der vorhergehenden Ansprüche,
**dadurch gekennzeichnet, dass**
über dem Anschlussraum (12) eine Deckelklappe (19) angeordnet ist.

4. Kasten nach einem der vorhergehenden Ansprüche,
**dadurch gekennzeichnet, dass**
der erste Deckel (1) verriegelbar ist.

5. Kasten nach einem der vorhergehenden Ansprüche,
**dadurch gekennzeichnet, dass**
der erste Deckel (1) mit einer Verriegelungseinrichtung versehen ist, die Befestigungs- und Verriegelungsmittel (20) und mit den Befestigungs- und Verriegelungsmitteln (20) wirkverbundenen Sperrmittel (21) umfasst, wobei die Befestigungs- und Verriegelungsmittel (20) am Schienenkanal befestigbar sind.

6. Kasten nach einem der vorhergehenden Ansprüche,
**dadurch gekennzeichnet, dass**
der Kasten (3) Befestigungselemente (22) umfasst, mit denen er am Schienenkanal befestigbar ist.

7. Kasten nach einem der vorhergehenden Ansprüche,
**dadurch gekennzeichnet, dass**
der erste Deckel (1) erste Arretierungsmittel (24) umfasst.

8. Kasten nach Anspruch 9,
**dadurch gekennzeichnet, dass**
die ersten Arretierungsmittel (24) mit mindestens einer Gegenarretierung (26) am Grundgehäuse (5) zusammenwirken.

9. Kasten nach einem der vorhergehenden Ansprüche,
**dadurch gekennzeichnet, dass**
der zweite Deckel (2) zweite Arretierungsmittel (25) aufweist.

10. Kasten nach Anspruch 11,
**dadurch gekennzeichnet, dass**
die zweiten Arretierungsmittel (25) am ersten Deckel (1) arretierbar sind.

11. Kasten nach einem der vorhergehenden Ansprüche,
**dadurch gekennzeichnet, dass**
mindestens einer der Deckel (1, 2) mit einem Griff (27) versehen sind.

12. Kasten nach Anspruch 13,
**dadurch gekennzeichnet, dass**
der Griff (27) einstückig mit einem Isolierkörper (28) zur Halterung der Kontaktbrücken (29) verbunden ist.

## Claims

1. Outlet or connection box (3) for a busbar trunking system for the purpose of distributing electrical energy, the busbar trunking system comprising a busbar channel having busbars and outlet points which are guided therein and to which the base housing (5) of the box can be connected, said box comprising contact plugs with which contact can be made at the contact points on the busbars, the contact plugs being electrically connected to an isolating contact apparatus (7) which is arranged in an isolating contact chamber (6) and is electrically bridged by contact bridges (29) located on a first cover (1) only when the first cover (1) is closed, protection and connection elements (8, 9, 10) being mounted in a connection chamber (12), the box (3) comprising a second cover (2), in addition to the first cover (1), which substantially covers only the isolating contact chamber (6), having the contact bridges arranged thereon, it being possible for at least the connection chamber (12) to be closed by means of the second cover (2) which is to be opened independently of the first cover (1), and the connection chamber (12) only being provided for protection and connection elements (8) which are safe from finger-touch, **characterized in that** the arrangement and mounting of the first cover (1) is designed such that the first cover (1) is to be opened either independently of the second cover (2) or necessarily only with the second cover (2).

2. Box according to Claim 1, **characterized in that** the second cover (2) comprises a first bearing point (4) which is connected to the base housing (5), and **in that** the second cover (2) comprises a second bearing point (11) which is associated with a second end side (14) of the box (3), **in that** the first bearing point (4) is associated with a first end side (13) which lies opposite the second end side (14), **in that** each cover (1, 2) is formed with two cover faces for the purpose of resting on the connection chamber (12) and on the isolating contact chamber (6), the cover face (15) on the connection chamber (12) of the first cover (1) being opened up so as to form a window, and the second cover (2) being connected to the first cover (1) via a second bearing point (11) such that the second cover (2) can be swung either completely over the isolating contact chamber (6) and the connection chamber (12) or only over the connection chamber (12).

3. Box according to one of the preceding claims, **characterized in that** a cover flap (19) is arranged over the connection chamber (12).

4. Box according to one of the preceding claims, **characterized in that** the first cover (1) can be latched.

5. Box according to one of the preceding claims, **characterized in that** the first cover (1) is provided with a latching apparatus which comprises fixing and latching means (20) and blocking means (21) operatively connected to the fixing and latching means (20), it being possible for the fixing and latching means (20) to be fixed to the busbar channel.

6. Box according to one of the preceding claims, **characterized in that** the box (3) comprises fixing elements (22), by means of which it can be fixed to the busbar channel.

7. Box according to one of the preceding claims, **characterized in that** the first cover (1) comprises first locking means (24).

8. Box according to Claim 9, **characterized in that** the first locking means (24) interact with at least one opposing locking means (26) on the base housing (5).

9. Box according to one of the preceding claims, **characterized in that** the second cover (2) has second locking means (25).

10. Box according to Claim 11, **characterized in that** the second locking means (25) can be locked at the first cover (1).

11. Box according to one of the preceding claims, **characterized in that** at least one of the covers (1, 2) is provided with a handle (27).

12. Box according to Claim 13, **characterized in that** the handle (27) is connected integrally to an insulating body (28) for the purpose of holding the contact bridges (29).

## Revendications

1. Boîtier (3) de sortie ou d'interconnexion pour une canalisation préfabriquée pour la distribution d'énergie électrique, dans lequel la canalisation préfabriquée comprend un canal de barres avec des barres de courant conduites à l'intérieur de ce canal de barres et des points de sortie, auxquels le coffret (5) de base du boîtier peut être connecté, dans lequel il comprend des fiches de contact, qui peuvent établir le contact avec les barres de courant aux points de contact, dans lequel les fiches de contact sont reliées électriquement à un dispositif (7) de contact de coupure disposé dans un espace (6) de contact de coupure, dispositif (7) qui n'est court-circuité électriquement que si le premier couvercle (1) est fermé, par des ponts (29) de contact se trouvant sur un premier couvercle (1), dans lequel des éléments (8, 9, 10) de protection et d'interconnexion sont montés dans un espace (12) d'interconnexion, dans lequel le boîtier (3) comprend, en plus du premier couvercle (1) ne recouvrant essentiellement que l'espace (6) de contact de coupure avec les ponts de contact qui sont disposés sur ce premier couvercle, un deuxième couvercle (2), dans lequel au moins l'espace (12) d'interconnexion peut être fermé par l'intermédiaire du deuxième couvercle (2), qui doit être ouvert indépendamment du premier couvercle (1), et dans lequel l'espace (12) d'interconnexion n'est prévu que pour des éléments (8) de protection et d'interconnexion qui peuvent être touchés de manière sûre, **caractérisé en ce que** le montage et la position du premier couvercle (1) sont réalisés de telle sorte que le premier couvercle (1) doit être ouvert soit indépendamment du deuxième couvercle (2), soit forcément uniquement avec le deuxième couvercle (2).

2. Boîtier selon la revendication 1, **caractérisé en ce que** le deuxième couvercle (2) comprend un premier point (4) d'appui, qui est relié au coffret (5) de base, et **en ce que** le deuxième couvercle (2) comprend un deuxième point (11) d'appui, qui est attribué à une deuxième face (14) du boîtier, **en ce que** le premier point (4) d'appui est associé à une première face (13) opposée à la deuxième face (14), **en ce que** chaque couvercle (1, 2) est formé de deux surfaces de recouvrement pour prendre appui sur l'espace (12) d'interconnexion et sur l'espace (6) de contact de coupure, dans lequel la surface (15) de recouvrement présente une ouverture ayant la forme d'une fenêtre sur l'espace (12) d'interconnexion du premier couvercle (1) et le deuxième couvercle (2) est relié au premier couvercle (1) par l'intermédiaire d'un deuxième point (11) d'appui de telle sorte que le deuxième couvercle (2) peut être relevé, soit complètement au-dessus de l'espace (6) de contact de coupure et de l'espace (12) d'interconnexion, soit seulement au-dessus de l'espace (12) d'interconnexion.

3. Boîtier selon l'une des revendications précédentes, **caractérisé en ce qu**'un clapet (19) de couvercle est disposé au-dessus de l'espace (12) d'interconnexion.

4. Boîtier selon l'une des revendications précédentes, **caractérisé en ce que** le premier couvercle (1) peut être verrouillé.

5. Boîtier selon l'une des revendications précédentes, **caractérisé en ce que** le premier couvercle (1) est pourvu d'un dispositif de verrouillage, qui comprend des moyens (20) de fixation et de verrouillage et des moyens (21) de blocage en liaison fonctionnelle avec les moyens (20) de fixation et de verrouillage, dans lequel les moyens (20) de fixation et de verrouillage peuvent être fixés sur le canal de barres.

6. Boîtier selon l'une des revendications précédentes, **caractérisé en ce que** le boîtier (3) comprend des éléments (22) de fixation lui permettant d'être fixé sur le canal de barres.

7. Boîtier selon l'une des revendications précédentes, **caractérisé en ce que** le premier couvercle (1) comprend des premiers moyens (24) d'arrêt.

8. Boîtier selon la revendication 7, **caractérisé en ce que** les premiers moyens (24) d'arrêt interagissent avec au moins un contre-arrêt (26) au coffret (5) de base.

9. Boîtier selon l'une des revendications précédentes, **caractérisé en ce que** le deuxième couvercle (2) présente des deuxièmes moyens (25) d'arrêt.

10. Boîtier selon la revendication 9, **caractérisé en ce que** les deuxièmes moyens (25) d'arrêt peuvent être arrêtés au premier couvercle(1).

11. Boîtier selon l'une des revendications précédentes, **caractérisé en ce qu**'au moins l'un des couvercles (1, 2) est pourvu d'une poignée (27).

12. Boîtier selon la revendication 11, **caractérisé en ce que** la poignée (27) est reliée en étant d'une seule pièce à un corps (28) isolant pour le maintien des ponts (29) de contact.
